# EUROPÄISCHE PATENTANMELDUNG

(11) **EP 4 438 996 A1**
(43) Veröffentlichungstag der Anmeldung: **02.10.2024**
(21) Anmeldenummer: 24162725.6
(22) Anmeldetag: 11.03.2024
(51) Int. Cl.: F41H 5/22, B60R 21/13, F41H 7/02

(54) **ÜBERROLLSCHUTZSYSTEM UND GESCHÜTZTES FAHRZEUG**

(30) Priorität: 30.03.2023 DE 102023108238
(71) Anmelder: Rheinmetall Landsysteme GmbH, 29345 Südheide (DE)
(72) Erfinder: SEEGER, Martin, 34117 Kassel (DE); BLÄßING, Dr., Tobias, 34314 Hohenkirchen/Espenau (DE); GERLACH, Klaus-Peter, 34212 Melsungen (DE); BECKMANN, Armin, 34621 Frielendorf (DE)
(74) Vertreter: Horn Kleimann Waitzhofer Schmid-Dreyer Patent- und Rechtsanwälte PartG mbB

(57) **Zusammenfassung**

Überrollschutzsystem (19A, 19B) für ein geschütztes Fahrzeug (1), mit einem Schutzelement (30, 50) zum Schützen eines sich teilweise innerhalb und teilweise außerhalb des geschützten Fahrzeugs (1) aufhaltenden Besatzungsmitglieds (29) bei einem Überschlag des geschützten Fahrzeugs (1), und einem dem Schutzelement (30, 50) zugeordneten Aktor (41, 53), wobei der Aktor (41, 53) dazu eingerichtet ist, das Schutzelement (30, 50) unmittelbar vor oder bei dem Überschlag des geschützten Fahrzeugs (1) von einem eingefahrenen Zustand (Z1) in einen ausgefahrenen Zustand (Z2) zu verbringen, und wobei das Schutzelement (30, 50) in dem ausgefahrenen Zustand (Z2) über Bereiche des Besatzungsmitglieds (29), die während des Überschlags außerhalb des geschützten Fahrzeugs (1) angeordnet sind, herausragt.

## Beschreibung

Die vorliegende Erfindung betrifft ein Überrollschutzsystem für ein geschütztes Fahrzeug und ein geschütztes Fahrzeug mit einem derartigen Überrollschutzsystem.

Geschützte Fahrzeuge, wie beispielsweise Schützenpanzer, weisen gemäß betriebsinternen Erkenntnissen oftmals eine unübersichtliche Fahrzeuggeometrie auf. Dies kann es erforderlich machen, dass einzelne Besatzungsmitglieder über Luke fahren. Dies kann stehend oder sitzend erfolgen. "Über Luke" heißt dabei, dass der Oberkörper oder zumindest der Kopf des jeweiligen Besatzungsmitglieds aus einer Lukenöffnung des geschützten Fahrzeugs in eine Umgebung des geschützten Fahrzeugs hineinragt. Dies kann zum Beispiel für die Unterstützung des Fahrers durch den Kommandanten oder für eine bessere Führbarkeit des geschützten Fahrzeugs im zivilen Straßenverkehr erforderlich sein. Dieser Umstand kann dazu führen, dass im Falle eines Überschlags des geschützten Fahrzeugs das über Luke fahrende Besatzungsmitglied tödlichen Gefahren ausgesetzt ist. Im schlimmsten Fall kann es dazu kommen, dass das Besatzungsmitglied durch das sich überschlagende geschützte Fahrzeug zerquetscht und somit tödlich verletzt wird.

Vor diesem Hintergrund besteht eine Aufgabe der vorliegenden Erfindung darin, ein verbessertes Überrollschutzsystem für ein geschütztes Fahrzeug zur Verfügung zu stellen.

Demgemäß wird ein Überrollschutzsystem für ein geschütztes Fahrzeug vorgeschlagen. Das Überrollschutzsystem umfasst ein Schutzelement zum Schützen eines sich teilweise innerhalb und teilweise außerhalb des geschützten Fahrzeugs aufhaltenden Besatzungsmitglieds bei einem Überschlag des geschützten Fahrzeugs und einen dem Schutzelement zugeordneten Aktor, wobei der Aktor dazu eingerichtet ist, das Schutzelement unmittelbar vor oder bei dem Überschlag des geschützten Fahrzeugs von einem eingefahrenen Zustand in einen ausgefahrenen Zustand zu verbringen, und wobei das Schutzelement in dem ausgefahrenen Zustand über Bereiche des Besatzungsmitglieds, die während des Überschlags außerhalb des geschützten Fahrzeugs angeordnet sind, herausragt.

Dadurch, dass das Schutzelement in dem ausgefahrenen Zustand über die Bereiche des Besatzungsmitglieds, die während eines Überschlags des geschützten Fahrzeugs außerhalb des geschützten Fahrzeugs angeordnet sind, herausragt, stützt sich das geschützte Fahrzeug bei einem Überschlag auf dem Schutzelement ab, wodurch das Besatzungsmitglied Zeit erhält, sich vollständig in das geschützte Fahrzeug zurückzuziehen. Hierdurch wird die Gefahr von Verletzungen des Besatzungsmitglieds durch das sich überschlagende geschützte Fahrzeug signifikant reduziert.

Unter einem "Überrollschutzsystem" ist vorliegend demgemäß bevorzugt kein System zu verstehen, welches ein Überrollen oder einen Überschlag des geschützten Fahrzeugs an sich verhindert, sondern ein System, welches mögliche negative Folgen eines Überschlags des geschützten Fahrzeugs für das Besatzungsmitglied verhindert oder zumindest reduziert. Das Überrollschutzsystem kann auch als Überrollschutzvorrichtung bezeichnet werden. Das Überrollschutzsystem kann bevorzugt an geschützten Fahrzeugen, die ab Werk noch kein derartiges Überrollschutzsystem aufweisen, nachgerüstet werden. Das Überrollschutzsystem ist demgemäß nachrüstbar. Das Überrollschutzsystem ist bevorzugt modular aufgebaut. Das heißt insbesondere, dass das Überrollschutzsystem als Nachrüstmodul an dem geschützten Fahrzeug angebracht werden kann. Alternativ kann das geschützte Fahrzeug auch ab Werk mit einem derartigen Überrollschutzsystem ausgerüstet werden.

Darunter, dass das Fahrzeug "geschützt" ist, ist vorliegend insbesondere zu verstehen, dass das geschützte Fahrzeug gegen Beschuss, Sprengfallen, unkonventionelle Spreng- oder Brandvorrichtungen (USBV, engl.: Improvised Explosive Devices, IED), Minen oder dergleichen geschützt ist. Hierzu kann das geschützte Fahrzeug gepanzert sein. Das geschützte Fahrzeug kann ein Kettenfahrzeug oder ein Radfahrzeug sein. Nachfolgend wird davon ausgegangen, dass das geschützte Fahrzeug ein Radfahrzeug ist. Das geschützte Fahrzeug kann mehrere Radachsen aufweisen, an denen Räder vorgesehen sind. Beispielsweise sind vier Radachsen mit acht Rädern vorgesehen. Es können jedoch auch weniger oder mehr als vier Radachsen vorgesehen sein.

Das geschützte Fahrzeug weist vorzugsweise eine geschützte Fahrzeugzelle auf. Die geschützte Fahrzeugzelle kann insbesondere ein austauschbares Missionsmodul des geschützten Fahrzeugs sein. Ein Beispiel für ein derartiges Missionsmodul ist ein Sanitätsmodul. Das geschützte Fahrzeug, insbesondere die geschützte Fahrzeugzelle, weist beispielsweise eine geneigte Vorderwand und ein Dach auf. Das Überrollschutzsystem kann insbesondere bei einem Überschlag des geschützten Fahrzeugs verhindern, dass das geschützte Fahrzeug auf der Vorderwand oder auf dem Dach zu liegen kommt.

An dem geschützten Fahrzeug oder an der geschützten Fahrzeugzelle können eine oder mehrere Lukenöffnungen vorgesehen sein. Jeder Lukenöffnung kann ein derartiges Überrollschutzsystem zugeordnet sein. Ferner kann jede Lukenöffnung mit Hilfe eines beweglichen, insbesondere verschiebbaren oder verschwenkbaren, Lukendeckels geöffnet und geschlossen werden. Die Lukenöffnung oder die Lukenöffnungen können an einer Wandung des geschützten Fahrzeugs oder der geschützten Fahrzeugzelle vorgesehen sein. Die Wandung kann Teil des vorgenannten Dachs oder der vorgenannten Vorderwand sein.

Dass sich das Besatzungsmitglied "teilweise innerhalb und teilweise außerhalb" des geschützten Fahrzeugs aufhält oder befindet, kann vorliegend bedeuten, dass das Besatzungsmitglied beispielsweise seinen Oberkörper, insbesondere zumindest seinen Kopf, aus einer wie zuvor erwähnten Lukenöffnung streckt, um über Luke zu fahren. In diesem Fall kann sich beispielsweise der Unterkörper des Besatzungsmitglieds in einem Innenraum des geschützten Fahrzeugs oder der geschützten Fahrzeugzelle befinden, wobei sich der Oberkörper außerhalb dieses Innenraums in einer Umgebung des geschützten Fahrzeugs befindet. "Teilweise innerhalb und teilweise außerhalb" ist vorliegend insbesondere so zu verstehen, dass sich das Besatzungsmitglied gleichzeitig teilweise innerhalb und teilweise außerhalb des Innenraums aufhält.

Dem geschützten Fahrzeug ist bevorzugt ein Koordinatensystem mit einer ersten Raumrichtung, Längsrichtung oder x-Richtung, einer zweiten Raumrichtung, Hochrichtung oder y-Richtung und einer dritten Raumrichtung, Querrichtung oder z-Richtung zugeordnet. Die Richtungen sind insbesondere senkrecht zueinander orientiert. Eine Bewegung des geschützten Fahrzeugs um die x-Richtung kann als Rollen oder Rollbewegung bezeichnet werden. Eine Bewegung des geschützten Fahrzeugs um die y-Richtung kann als Gieren oder Gierbewegung bezeichnet werden. Eine Bewegung des geschützten Fahrzeugs um die z-Richtung kann als Nicken oder Nickbewegung bezeichnet werden. Eine Fahrtrichtung des geschützten Fahrzeugs ist vorzugsweise entgegen der x-Richtung orientiert. Das geschützte Fahrzeug kann sich jedoch auch - beispielsweise bei einer Rückwärtsfahrt - entgegen der Fahrtrichtung fortbewegen.

Unter einem "Überschlag" des geschützten Fahrzeugs ist vorliegend insbesondere zu verstehen, dass sich das geschützte Fahrzeug zumindest von den Rädern auf das Dach oder auf die Vorderwand dreht. Dies schließt jedoch nicht aus, dass sich das geschützte Fahrzeug bei dem Überschlag zumindest einmal oder auch mehrmals um die bevorzugt senkrecht zu den Radachsen orientierte x-Richtung und/oder um die bevorzugt parallel zu den Radachsen orientierte z-Richtung überschlägt oder dreht. Ein Überschlag des geschützten Fahrzeugs kann auch eine kombinierte Roll-, Gier- und/oder Nickbewegung sein. "Unmittelbar vor dem Überschlag" kann vorliegend bedeuten, dass das Schutzelement Bruchteile von Sekunden vor dem eigentlichen Überschlag ausgelöst wird. Dies kann basierend auf Sensorsignalen einer Sensorik des Überrollschutzsystems erfolgen.

Dass das Schutzelement das Besatzungsmitglied "schützt" bedeutet vorliegend insbesondere, dass das Schutzelement verhindert, dass das Besatzungsmitglied zwischen dem geschützten Fahrzeug und einem Untergrund, auf dem sich das geschützte Fahrzeug fortbewegt, eingeklemmt wird. Insbesondere gewinnt das Besatzungsmitglied im Vergleich zu einem geschützten Fahrzeug ohne ein derartiges Überrollschutzsystem genug Zeit, dass sich das Besatzungsmitglied vor einem Kontakt des Besatzungsmitglieds mit dem Untergrund oder mit in der Umgebung des geschützten Fahrzeugs angeordneten Objekten in den Innenraum zurückziehen kann.

Der Aktor kann auch als Aktuator oder als Stellelement bezeichnet werden. Dem Schutzelement können mehrere derartige Aktoren zugeordnet sein. Nachfolgend wird jedoch auf nur einen Aktor eingegangen. Der Aktor kann beispielsweise explosionsartig ein Fluid, insbesondere ein Gas, freisetzen. Insbesondere ist der Aktor dazu geeignet, Energie umzuwandeln, um das Schutzelement von dem eingefahrenen Zustand in den ausgefahrenen Zustand zu verbringen. Beispielsweise kann der Aktor chemische Energie in mechanische Energie umwandeln. Der Aktor kann ein, insbesondere pyrotechnischer, Gasgenerator sein. Dies ist jedoch nicht zwingend erforderlich.

Darunter, dass das Schutzelement in dem ausgefahrenen Zustand über Bereiche des Besatzungsmitglieds, die während eines Überschlags außerhalb des geschützten Fahrzeugs angeordnet sind, "herausragt", ist vorliegend insbesondere zu verstehen, dass das Schutzelement so weit über die Bereiche des Besatzungsmitglieds, beispielsweise den Kopf des Besatzungsmitglieds, die aus der Lukenöffnung herausragen, herüberragt oder herausragt, dass das Besatzungsmitglied bei einem Überschlag des geschützten Fahrzeugs nicht in Kontakt mit dem Untergrund gerät, sondern das Schutzelement den Untergrund kontaktiert.

Gemäß einer Ausführungsform weist das Überrollschutzsystem einen Lukendeckel zum Öffnen und Schließen einer an dem geschützten Fahrzeug vorgesehenen Lukenöffnung auf, wobei das Schutzelement von dem Lukendeckel entkoppelt ist.

Wie zuvor erwähnt, ist die Lukenöffnung bevorzugt an der zuvor erwähnten Wandung des geschützten Fahrzeugs oder der geschützten Fahrzeugzelle vorgesehen. Die Wandung kann Teil des Dachs oder der Vorderwand des geschützten Fahrzeugs sein. Der Lukendeckel kann verschwenkbar an der Wandung angeschlagen sein. In diesem Fall ist der Lukendeckel zum Öffnen und Schließen der Lukenöffnung schwenkbar. Der Lukendeckel kann jedoch zum Öffnen und Schließen der Lukenöffnung auch linear verschiebbar sein. Dass das Schutzelement von dem Lukendeckel "entkoppelt" ist, bedeutet vorliegend insbesondere, dass keine funktionale Wirkverbindung zwischen dem Lukendeckel und dem Schutzelement vorgesehen ist. Weder ist der Lukendeckel mechanisch mit dem Schutzelement wirkverbunden, noch besteht eine Wirkverbindung in irgendeiner Art derart, dass der Lukendeckel in Abhängigkeit von dem Zustand des Schutzelements nicht geöffnet und geschlossen werden kann. Dies schließt jedoch nicht aus, dass an dem Lukendeckel oder an der Wandung ein Schalter vorgesehen ist, welcher ein Aktivieren des Aktors verhindert, wenn der Lukendeckel geschlossen ist. Hierdurch wird ein unnötiges Verbringen des Schutzelements von dem eingefahrenen Zustand in den ausgefahrenen Zustand verhindert.

Gemäß einer weiteren Ausführungsform führt das Schutzelement bei dem Verbringen desselben von dem eingefahrenen Zustand in den ausgefahrenen Zustand eine lineare und/oder eine rotatorische Bewegung durch.

Beispielsweise bewegt sich das Schutzelement bei dem Verbringen desselben von dem eingefahrenen Zustand in den ausgefahrenen Zustand entlang der y-Richtung. Das Schutzelement kann alternativ bei dem Verbringen desselben von dem eingefahrenen Zustand in den ausgefahrenen Zustand jedoch auch anstelle einer linearen Bewegung eine rotatorische Bewegung vollziehen. Hierbei kann das Schutzelement derart um eine Drehachse verschwenkt werden, dass das Schutzelement eine Schwenkbewegung oder Rotationsbewegung um diese Drehachse durchführt, um das Schutzelement von dem eingefahrenen Zustand in den ausgefahrenen Zustand und optional auch wieder umgekehrt zu verbringen. Es kann jedoch auch eine Kombination einer linearen und einer rotatorischen Bewegung vorgesehen sein, um das Schutzelement von dem eingefahrenen Zustand in den ausgefahrenen Zustand und gegebenenfalls umgekehrt zu verbringen.

Gemäß einer weiteren Ausführungsform verriegelt sich das Schutzelement in dem ausgefahrenen Zustand.

Hierzu kann beispielsweise eine mechanische Verriegelungseinrichtung vorgesehen sein. Die Verriegelungseinrichtung kann beispielweise eine Sperrklinke sein oder aufweisen, die in dem ausgefahrenen Zustand formschlüssig in das Schutzelement eingreift. Dadurch, dass sich das Schutzelement in dem ausgefahrenen Zustand verriegelt, wird beispielsweise verhindert, dass das Schutzelement durch eine auf dieses wirkende Gewichtskraft des geschützten Fahrzeugs von dem ausgefahrenen Zustand zurück in den eingefahrenen Zustand verbracht wird. Hierdurch wird insbesondere verhindert, dass der Aktor mit der gesamten Gewichtskraft des geschützten Fahrzeugs belastet wird.

Gemäß einer weiteren Ausführungsform weist das Schutzelement einen Schutzbügel auf, der mit Hilfe von Führungselementen linear an Führungshülsen geführt ist, wobei die Führungselemente mit dem Schutzbügel verbunden sind.

Vorzugsweise sind zwei derartige Führungselemente vorgesehen. Die Führungselemente sind bevorzugt voneinander beabstandet angeordnet und fest mit dem Schutzbügel verbunden, beispielsweise mit diesem verschraubt oder verschweißt. Jedem Führungselement ist insbesondere eine derartige Führungshülse zugeordnet. Die Führungshülsen können mit einer tragenden Struktur des geschützten Fahrzeugs oder der geschützten Fahrzeugzelle fest verbunden, insbesondere verschweißt, sein. Die tragende Struktur kann beispielsweise die zuvor erwähnte Wandung sein. Der Aktor oder die Aktoren können in die Führungshülsen integriert sein. Dies ist jedoch nicht zwingend erforderlich.

Gemäß einer weiteren Ausführungsform ist der Aktor mit dem Schutzbügel gekoppelt.

Zum Koppeln des Aktors mit dem Schutzbügel kann beispielsweise ein Kopplungselement vorgesehen sein. Das Kopplungselement kann stangenförmig sein. Beispielsweise ist das Kopplungselement ein Kolben eines Hydraulikzylinders. In diesem Fall kann der Aktor selbst ein Hydraulikzylinder sein, wobei das Kopplungselement insbesondere Teil des Aktors ist. Das Kopplungselement kann beispielsweise mit Hilfe eines Kugelkopfs mit dem Schutzbügel wirkverbunden oder gekoppelt sein. Das Kopplungselement kann auch mit dem Schutzbügel verschraubt oder verschweißt sein.

Gemäß einer weiteren Ausführungsform weist der Schutzbügel einen Mittelabschnitt und endseitig an dem Mittelabschnitt angebrachte Seitenabschnitte auf, wobei die Seitenabschnitte schräg zu dem Mittelabschnitt orientiert sind.

Der Schutzbügel weist somit bevorzugt eine bogenförmige Geometrie auf. Insbesondere ist der Mittelabschnitt zwischen einem ersten Seitenabschnitt und einem zweiten Seitenabschnitt angeordnet. In dem eingefahrenen Zustand des Schutzelements liegt der Schutzbügel, insbesondere die Seitenabschnitte des Schutzbügels, auf der Wandung des geschützten Fahrzeugs oder der geschützten Fahrzeugzelle auf. Insbesondere kann der Schutzbügel an einer Außenseite der Wandung anliegen. Alternativ kann in der Wandung auch eine Tasche oder Ausnehmung vorgesehen sein, in welcher der Schutzbügel in dem eingefahrenen Zustand aufgenommen ist. In diesem Fall steht der Schutzbügel in dem eingefahrenen Zustand nicht über die Außenseite der Wandung über, sondern ist bündig mit dieser angeordnet oder steht hinter dieser zurück.

Gemäß einer weiteren Ausführungsform ist das Schutzelement stempelförmig.

In diesem Fall kann das Schutzelement beispielsweise einen kreisförmigen Querschnitt aufweisen. Das Schutzelement ist insbesondere in einem Führungselement aufgenommen und an diesem linear geführt. Das Führungselement kann mit der zuvor erwähnten tragenden Struktur des geschützten Fahrzeugs oder der geschützten Fahrzeugzelle verbunden sein. Beispielsweise ist die Führungshülse mit der Wandung verschraubt oder verschweißt. Das Schutzelement kann insbesondere ein Kolben eines Hydraulikzylinders sein. In diesem Fall ist die Führungshülse ein Gehäuse des Hydraulikzylinders, und der Aktor kann in die Führungshülse integriert sein. Es ist jedoch auch ein hiervon abweichender Aufbau möglich.

Gemäß einer weiteren Ausführungsform ist der Aktor dazu eingerichtet, das Schutzelement von dem ausgefahrenen Zustand zurück in den eingefahrenen Zustand zu verbringen.

Hierdurch ist es möglich, das Überrollschutzsystem nach einem Überschlag des geschützten Fahrzeugs erneut wiederzuverwenden. Ferner kann das geschützte Fahrzeug auch mit Hilfe eines geeigneten Ansteuern des Schutzelements mit Hilfe des Aktors zumindest von dem Dach oder der Vorderwand auf eine Seite des geschützten Fahrzeugs gedreht werden.

Gemäß einer weiteren Ausführungsform ist der Aktor dazu eingerichtet, das Schutzelement pneumatisch, hydraulisch, elektrisch, mechanisch und/oder explosiv von dem eingefahrenen Zustand in den ausgefahrenen Zustand zu verbringen.

Beispielsweise kann der Aktor rein mechanisch fungieren. In diesem Fall kann der Aktor beispielsweise vorgespannte Federpakete aufweisen. Wie zuvor erwähnt, kann der Aktor ein Hydraulikzylinder sein oder einen Hydraulikzylinder aufweisen. Der Hydraulikzylinder kann einfach oder teleskopierbar sein. Auch ein elektrisches Wirkprinzip ist möglich. In diesem Fall kann der Aktor beispielsweise einen Elektromotor mit einer Verstelleinrichtung umfassen. Der Aktor kann ferner explosiv fungieren. In diesem Fall kann ein, insbesondere pyrotechnischer, Gasgenerator als Aktor eingesetzt werden. Es können auch Kombinationen der vorgenannten Wirkprinzipien zur Anwendung kommen. Hierbei sind insbesondere elektromechanische Wirkprinzipien möglich.

Gemäß einer weiteren Ausführungsform weist das Überrollschutzsystem eine Sensorik, die dazu eingerichtet ist, eine Verkippung des geschützten Fahrzeugs um zumindest eine Raumrichtung zu erfassen, und eine Regel- und Steuereinheit auf, die dazu eingerichtet ist, den Aktor basierend auf Sensorsignalen der Sensorik derart anzusteuern, dass der Aktor das Schutzelement unmittelbar vor oder bei dem Überschlag des geschützten Fahrzeugs von dem eingefahrenen Zustand in den ausgefahrenen Zustand verbringt.

Die Sensorik kann verschiedenste Sensoren umfassen. Beispielsweise kann die Sensorik einen oder mehrere Neigungssensoren, einen oder mehrere Lagesensoren, einen oder mehrere Beschleunigungssensoren oder dergleichen aufweisen. Die Sensorik ist mit der Regel- und Steuereinheit des Überrollschutzsystems wirkverbunden. Die Wirkverbindung kann drahtgebunden oder drahtlos sein. Die Regel- und Steuereinheit kann ein fahrzeuginternes System, wie beispielsweise ein CAN-Knoten (Engl.: Controller Area Network), oder ein beliebiges Steuergerät sein. Die Regel- und Steuereinheit ist wiederum mit dem Aktor wirkverbunden. Auch hier kann die Wirkverbindung drahtgebunden oder drahtlos sein. Die Regel- und Steuereinheit dient zur Datenauswertung und zur Weitergabe von Steuersignalen an den Aktor. Mit Hilfe der Sensorik kann beispielsweise eine Verkippung des geschützten Fahrzeugs um die x-Richtung, um die y-Richtung und/oder um die z-Richtung erfasst werden. Wird ein bestimmter voreingestellter Grenzwert der Verkippung des geschützten Fahrzeugs überschritten, so dass mit einer gewissen Wahrscheinlichkeit zu erwarten ist, dass sich das geschützte Fahrzeug überschlagen wird, so steuert die Regel- und Steuereinheit den Aktor derart an, dass dieser das Schutzelement von dem eingefahrenen Zustand in den ausgefahrenen Zustand verbringt. Die Sensorik zur Überschlagsdetektion kann ferner auch für weitere Komponenten des geschützten Fahrzeugs genutzt werden, welche spezifische Lageinformationen des geschützten Fahrzeugs benötigen. Dies betrifft beispielsweise eine Waffensensorik einer Bewaffnung des geschützten Fahrzeugs.

Gemäß einer weiteren Ausführungsform weist das Überrollschutzsystem ein Tragelement zum Tragen des Besatzungsmitglieds und eine Verstelleinheit zum Verstellen einer Höhenposition des Tragelements auf, wobei die Regel- und Steuereinheit dazu eingerichtet ist, die Verstelleinheit basierend auf Sensorsignalen der Sensorik derart anzusteuern, dass die Verstelleinheit unmittelbar vor oder bei dem Überschlag des geschützten Fahrzeugs die Höhenposition des Tragelements derart verstellt, dass sich das Besatzungsmitglied vollständig in das geschützte Fahrzeug hineinverlagert.

Somit kann also die durch das Schutzelement gewonnene Zeit dazu genutzt werden, das Besatzungsmitglied mit Hilfe des Tragelements und der Verstelleinheit vollständig in das geschützte Fahrzeug hineinzubewegen. Beispielsweise ist die Verstelleinheit mit Hilfe einer Aufhängung an der geschützten Fahrzeugzelle, insbesondere an der Wandung, aufgehängt. Das Tragelement ist bevorzugt innerhalb des Innenraums angeordnet. Mit Hilfe der Verstelleinheit kann eine Position des Tragelements entlang der y-Richtung oder entlang der Hochrichtung des geschützten Fahrzeugs verstellt werden. Unter der "Höhenposition" ist vorliegend die Position des Tragelements entlang der y-Richtung oder entlang der Hochrichtung zu verstehen. Bei einer Auslösung des Überrollschutzsystems bewegen sich das Tragelement und das Schutzelement bevorzugt in unterschiedliche, insbesondere in entgegengesetzte, Richtungen. Beispielsweise bewegt sich das Tragelement bei dem Verbringen des Schutzelements von dem eingefahrenen Zustand in den ausgefahrenen Zustand entgegen der y-Richtung, insbesondere nach unten, während sich das Schutzelement entlang der y-Richtung, insbesondere nach oben, bewegt. Für den Fall, dass das Schutzelement einen wie zuvor erwähnten Schutzbügel aufweist, bewegen sich der Schutzbügel und das Tragelement bei dem Verbringen des Schutzelements von dem eingefahrenen Zustand in den ausgefahrenen Zustand voneinander weg. Das heißt insbesondere, dass sich der Schutzbügel und das Tragelement bei der Auslösung des Überrollschutzsystems gegensätzlich bewegen. Das Tragelement kann ein Sitz für das Besatzungsmitglied sein. Demgemäß können vorliegend die Begriffe "Tragelement" und "Sitz" beliebig gegeneinander getauscht werden. Alternativ kann das Tragelement auch eine Stehplattform für das Besatzungsmitglied sein. Das Besatzungsmitglied kann an einer derartigen Stehplattform festgeschnallt sein, so dass das Besatzungsmitglied bei einem Überschlag des geschützten Fahrzeugs nicht aus der geschützten Fahrzeugzelle herausgeschleudert werden kann. Nachfolgend wird jedoch davon ausgegangen, dass das Überrollschutzsystem ein Tragelement in Form eines Sitzes umfasst. Das Besatzungsmitglied kann an oder auf dem Tragelement in Form eines Sitzes festgeschnallt sein, so dass das Besatzungsmitglied auch in diesem Fall bei einem Überschlag des geschützten Fahrzeugs nicht aus der geschützten Fahrzeugzelle herausgeschleudert werden kann. Für den Fall, dass das Tragelement ein Sitz ist, kann die Verstelleinheit demgemäß als Sitzverstelleinheit bezeichnet werden. Demgemäß sind vorliegend die Begriffe "Verstelleinheit" und "Sitzverstelleinheit" gegeneinander tauschbar.

Ferner wird ein geschütztes Fahrzeug mit zumindest einem derartigen Überrollschutzsystem vorgeschlagen.

Das geschützte Fahrzeug kann mehrere derartige Überrollschutzsysteme aufweisen. Beispielsweise kann das geschützte Fahrzeug mehrere Lukenöffnungen aufweisen, wobei jeder Lukenöffnung ein derartiges Überrollschutzsystem zugeordnet sein kann. Es muss jedoch nicht zwingend jeder Lukenöffnung ein derartiges Überrollschutzsystem zugeordnet sein. Das geschützte Fahrzeug ist insbesondere ein militärisches Fahrzeug. Das geschützte Fahrzeug kann daher auch als Militärfahrzeug bezeichnet werden. Insbesondere ist das geschützte Fahrzeug ein gepanzertes Transportfahrzeug. Das geschützte Fahrzeug kann beispielsweise auch ein Schützenpanzer, ein Kampfpanzer, ein Bergepanzer, ein Minenräumpanzer, ein Spürpanzer oder dergleichen sein. Das geschützte Fahrzeug kann insbesondere auch ein Radpanzer sein. Das geschützte Fahrzeug kann als geschütztes Militärfahrzeug bezeichnet werden. Wie zuvor erwähnt, umfasst das geschützte Fahrzeug die geschützte Fahrzeugzelle. Die geschützte Fahrzeugzelle ist bevorzugt in der Art eines austauschbaren Missionsmoduls gestaltet.

Besonders bevorzugt umfasst das geschützte Fahrzeug ein Überrollschutzsystem mit einem Schutzelement zum Schützen eines sich teilweise innerhalb und teilweise außerhalb des geschützten Fahrzeugs aufhaltenden Besatzungsmitglieds bei einem Überschlag des geschützten Fahrzeugs und einen dem Schutzelement zugeordneten Aktor, wobei der Aktor dazu eingerichtet ist, das Schutzelement unmittelbar oder bei dem Überschlag des geschützten Fahrzeugs von einem eingefahrenen Zustand in einen ausgefahrenen Zustand zu verbringen, und wobei das Schutzelement in dem ausgefahrenen Zustand über Bereiche des Besatzungsmitglieds, die während des Überschlags außerhalb des geschützten Fahrzeugs angeordnet sind, herausragt.

Außerdem wird eine geschützte Fahrzeugzelle für ein derartiges geschütztes Fahrzeug vorgeschlagen. Die geschützte Fahrzeugzelle umfasst ein Überrollschutzsystem mit einem Schutzelement zum Schützen eines sich teilweise innerhalb und teilweise außerhalb der geschützten Fahrzeugzelle aufhaltenden Besatzungsmitglieds bei einem Überschlag der geschützten Fahrzeugzelle und einem dem Schutzelement zugeordneten Aktor, wobei der Aktor dazu eingerichtet ist, das Schutzelement unmittelbar vor oder bei dem Überschlag der geschützten Fahrzeugzelle von einem eingefahrenen Zustand in einen ausgefahrenen Zustand zu verbringen, und wobei das Schutzelement in dem ausgefahrenen Zustand über Bereiche des Besatzungsmitglieds, die während des Überschlags außerhalb der geschützten Fahrzeugzelle angeordnet sind, herausragt.

Gemäß einer Ausführungsform weist das geschützte Fahrzeug eine Wandung mit einer Lukenöffnung auf, wobei das Überrollschutzsystem an der Wandung montiert ist.

Wie zuvor erwähnt, kann die Wandung Teil des Dachs oder der Vorderwand des geschützten Fahrzeugs oder der geschützten Fahrzeugzelle sein. An der Wandung können mehrere Lukenöffnungen vorgesehen sein. Jeder Lukenöffnung kann ein Lukendeckel zugeordnet sein. Ferner kann auch jeder Lukenöffnung ein wie zuvor erläutertes Überrollschutzsystem zugeordnet sein. Für den Fall, dass einer Lukenöffnung ein Überrollschutzsystem zugeordnet ist, ist der der jeweiligen Lukenöffnung zugeordnete Lukendeckel von dem Schutzelement des Überrollschutzsystems entkoppelt. Das heißt insbesondere, dass bevorzugt weder eine mechanische noch eine funktionelle Verbindung zwischen dem Schutzelement und dem Lukendeckel vorgesehen ist.

Gemäß einer weiteren Ausführungsform weist das Überrollschutzsystem eine Führungshülse zum linearen Führen des Schutzelements auf, wobei die Führungshülse mit dem geschützten Fahrzeug verbunden ist.

Für den Fall, dass das Überrollschutzsystem einen wie zuvor erwähnten Schutzbügel aufweist, sind diesem beispielsweise zwei Führungselemente zugeordnet, wobei wiederum jedem Führungselement eine Führungshülse zugeordnet ist. Beispielsweise können die Führungshülsen mit einer wie zuvor erwähnten tragenden Struktur des geschützten Fahrzeugs oder der geschützten Fahrzeugzelle verbunden, insbesondere verschweißt sein. Die tragende Struktur kann die zuvor erwähnte Wandung sein. Für den Fall, dass das Schutzelement stempelförmig ist, ist diesem bevorzugt genau eine Führungshülse zugeordnet. Diese Führungshülse kann mit der Wandung insbesondere fest verbunden sein.

Die für das vorgeschlagene Überrollschutzsystem beschriebenen Ausführungsformen und Merkmale gelten für das vorgeschlagene geschützte Fahrzeug entsprechend und umgekehrt.

"Ein" ist vorliegend nicht zwingend als beschränkend auf genau ein Element zu verstehen. Vielmehr können auch mehrere Elemente, wie beispielsweise zwei, drei oder mehr, vorgesehen sein. Auch jedes andere hier verwendete Zählwort ist nicht dahingehend zu verstehen, dass eine Beschränkung auf genau die genannte Anzahl von Elementen gegeben ist. Vielmehr sind zahlenmäßige Abweichungen nach oben und nach unten möglich, soweit nichts Gegenteiliges angegeben ist.

Weitere mögliche Implementierungen des Überrollschutzsystems und/oder des geschützten Fahrzeugs umfassen auch nicht explizit genannte Kombinationen von zuvor oder im Folgenden bezüglich der Ausführungsbeispiele beschriebenen Merkmalen oder Ausführungsformen. Dabei wird der Fachmann auch Einzelaspekte als Verbesserungen oder Ergänzungen zu der jeweiligen Grundform des Überrollschutzsystems und/oder des geschützten Fahrzeugs hinzufügen.

Weitere vorteilhafte Ausgestaltungen und Aspekte des Überrollschutzsystems und/oder des geschützten Fahrzeugs sind Gegenstand der Unteransprüche sowie der im Folgenden beschriebenen Ausführungsbeispiele des Überrollschutzsystems und/oder des geschützten Fahrzeugs. Im Weiteren werden das Überrollschutzsystem und/oder das geschützte Fahrzeug anhand von bevorzugten Ausführungsformen unter Bezugnahme auf die beigelegten Figuren näher erläutert.
- Fig. 1: zeigt eine schematische Seitenansicht einer Ausführungsform eines geschützten Fahrzeugs;
- Fig. 2: zeigt eine schematische Aufsicht einer Ausführungsform eines Überrollschutzsystems für das geschützte Fahrzeug gemäß Fig. 1;
- Fig. 3: zeigt eine schematische Schnittansicht des Überrollschutzsystems gemäß der Schnittlinie III-III der Fig. 2;
- Fig. 4: zeigt eine weitere schematische Schnittansicht des Überrollschutzsystems gemäß der Schnittlinie III-III der Fig. 2;
- Fig. 5: zeigt eine schematische Aufsicht einer weiteren Ausführungsform eines Überrollschutzsystems für das geschützte Fahrzeug gemäß Fig. 1;
- Fig. 6: zeigt eine schematische Schnittansicht des Überrollschutzsystems gemäß der Schnittlinie VI-VI der Fig. 5; und
- Fig. 7: zeigt eine weitere schematische Schnittansicht des Überrollschutzsystems gemäß der Schnittlinie VI-VI der Fig. 5.

In den Figuren sind gleiche oder funktionsgleiche Elemente mit denselben Bezugszeichen versehen worden, sofern nichts anderes angegeben ist.

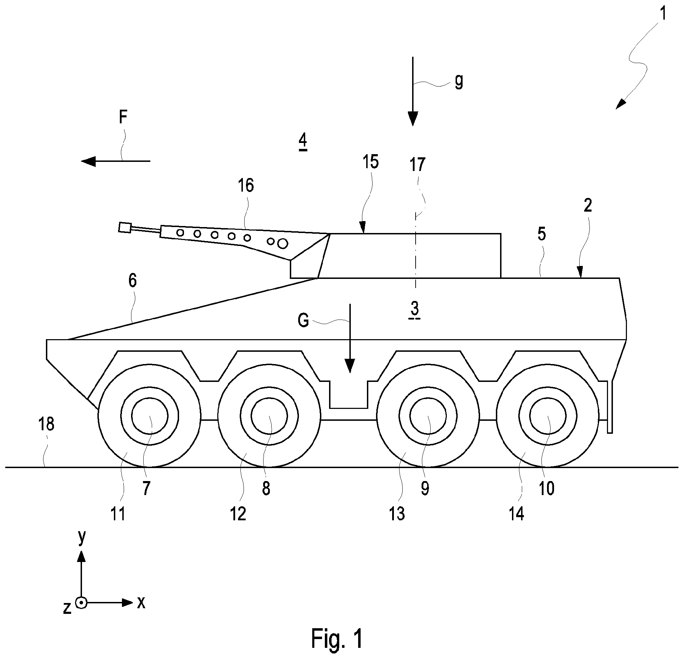

Die Fig. 1 zeigt eine schematische Seitenansicht einer Ausführungsform eines geschützten Fahrzeugs 1.

Das geschützte Fahrzeug 1 wird nachfolgend lediglich als Fahrzeug bezeichnet. Das Fahrzeug 1 kann ein militärisches Fahrzeug, insbesondere ein militärisches Nutzfahrzeug, sein. Das Fahrzeug 1 kann daher auch als Militärfahrzeug oder als Militärnutzfahrzeug bezeichnet werden. Insbesondere ist das Fahrzeug 1 ein gepanzertes Transportfahrzeug. Das Fahrzeug 1 kann beispielsweise auch ein Schützenpanzer, ein Kampfpanzer, ein Bergepanzer, ein Minenräumpanzer, ein Spürpanzer oder dergleichen sein. Das Fahrzeug 1 kann auch ein Radpanzer sein.

Das Fahrzeug 1 umfasst eine geschützte Fahrzeugzelle 2. Im Folgenden wird die geschützte Fahrzeugzelle 2 lediglich als Fahrzeugzelle bezeichnet. Die Fahrzeugzelle 2 kann eine Fahrzeugwanne sein und daher auch als solche bezeichnet werden. Die Begriffe "Fahrzeugzelle" und "Fahrzeugwanne" sind daher beliebig gegeneinander tauschbar. Das Fahrzeug 1 kann bewaffnet oder unbewaffnet sein. Das Fahrzeug 1 kann ein Fahrzeuggewicht von über 20 Tonnen aufweisen.

Die Fahrzeugzelle 2 ist gepanzert. Die Fahrzeugzelle 2 ist insbesondere gegen Beschuss, Sprengfallen, unkonventionelle Spreng- oder Brandvorrichtungen (USBV, Engl.: Improvised Explosive Devices, IED), Minen oder dergleichen geschützt. Die Fahrzeugzelle 2 umschließt einen Fahrzeuginnenraum oder Innenraum 3, in dem sich eine Besatzung des Fahrzeugs 1 aufhalten kann. Der Innenraum 3 ist über nicht gezeigte Türen und/oder Luken von einer Umgebung 4 des Fahrzeugs 1 her zugänglich. Der Innenraum 3 kann in mehrere Abschnitte oder Räume unterteilt sein, die voneinander getrennt sein können. Beispielsweise kann der Innenraum 3 in einen Maschinenraum, einen Besatzungsraum und/oder in einen Fahrzeugführerraum unterteilt sein. Dies ist jedoch nicht zwingend erforderlich.

Die Fahrzeugzelle 2 kann ferner zumindest teilweise oder vollständig modular ausgetauscht werden. In diesem Fall kann das Fahrzeug 1 unterschiedliche Missionsmodule, Missionskits oder Rüstsätze aufweisen, die beliebig austauschbar sind. Als Beispiel für ein derartiges Missionsmodul kann ein Sanitätsmodul genannt werden. Dieser zuvor erläuterte modulare Aufbau ist jedoch beliebig. Die Fahrzeugzelle 2 umfasst beispielsweise ein Dach 5 und eine geneigt zu dem Dach 5 angeordnete Vorderwand 6.

Das Fahrzeug 1 kann ein Radfahrzeug oder ein Kettenfahrzeug sein. Nachfolgend wird jedoch davon ausgegangen, dass das Fahrzeug 1 ein Radfahrzeug ist. Das Fahrzeug 1 umfasst mehrere Radachsen 7, 8, 9, 10, an denen Räder 11, 12, 13, 14 vorgesehen sind. Beispielsweise sind vier Radachsen 7, 8, 9, 10 mit acht Rädern 11, 12, 13, 14 vorgesehen. Es können jedoch auch weniger oder mehr als vier Radachsen 7, 8, 9, 10 vorgesehen sein. Unter einer "Radachse" ist vorliegend eine Achse zu verstehen, um die sich das jeweilige Rad 11, 12, 13, 14 dreht.

Die Anzahl der Radachsen 7, 8, 9, 10 ist grundsätzlich beliebig. Beispielsweise können vier Radachsen 7, 8, 9, 10 oder drei Radachsen 7, 8, 9, 10 vorgesehen sein. Jeder Radachse 7, 8, 9, 10 sind zwei Räder 11, 12, 13, 14 zugeordnet. Zumindest die Räder 11, 12 sind lenkbar. Bevorzugt sind jedoch alle Räder 11, 12, 13, 14 lenkbar. Vorzugsweise umfasst das Fahrzeug 1 einen Allradantrieb. Das heißt, alle Radachsen 7, 8, 9, 10 sind angetrieben.

Das Fahrzeug 1 kann einen Turm 15 mit einer Bewaffnung 16 aufweisen. Der Turm 15 ist drehbar an der Fahrzeugzelle 2 gelagert. Der Turm 15 kann eine elektrische oder hydraulische Antriebseinheit umfassen, um den Turm 15 um eine Drehachse 17 relativ zu der Fahrzeugzelle 2 zu drehen. Der Turm 15 kann jedoch auch manuell betrieben werden, falls die Antriebseinheit ausfällt. Die Bewaffnung 16 kann eine Maschinenkanone oder dergleichen sein. Die Bewaffnung 16 kann eine Primärbewaffnung oder Hauptbewaffnung sein. Es kann zusätzlich eine Sekundärbewaffnung, beispielsweise in Form eines Maschinengewehrs, vorgesehen sein.

Dem Fahrzeug 1 ist ein Koordinatensystem mit einer ersten Raumrichtung, Längsrichtung oder x-Richtung x, einer zweiten Raumrichtung, Hochrichtung oder y-Richtung y und einer dritten Raumrichtung, Querrichtung oder z-Richtung z zugeordnet. Die Richtungen x, y, z sind senkrecht zueinander orientiert. Eine Bewegung des Fahrzeugs 1 um die x-Richtung x kann als Rollen oder Rollbewegung bezeichnet werden. Eine Bewegung des Fahrzeugs 1 um die y-Richtung y kann als Gieren oder Gierbewegung bezeichnet werden. Eine Bewegung des Fahrzeugs 1 um die z-Richtung z kann als Nicken oder Nickbewegung bezeichnet werden.

Eine Schwerkraftrichtung g kann im Wesentlichen entgegen der y-Richtung y orientiert sein. Eine Gewichtskraft G des Fahrzeugs 1 wirkt entlang der Schwerkraftrichtung g. Das Fahrzeug 1 kann sich entlang einer Fahrtrichtung F und entgegen der Fahrtrichtung F auf einem Boden oder Untergrund 18 fortbewegen. Die Fahrtrichtung F kann entgegen der x-Richtung x orientiert sein. Der Untergrund 18 kann eine Fahrbahn oder ein beliebiges Gelände sein.

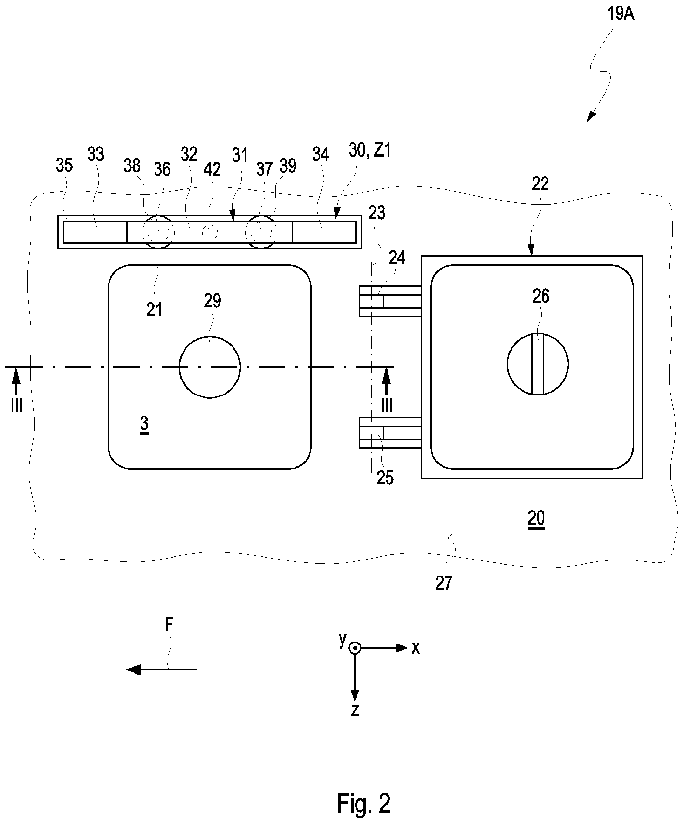

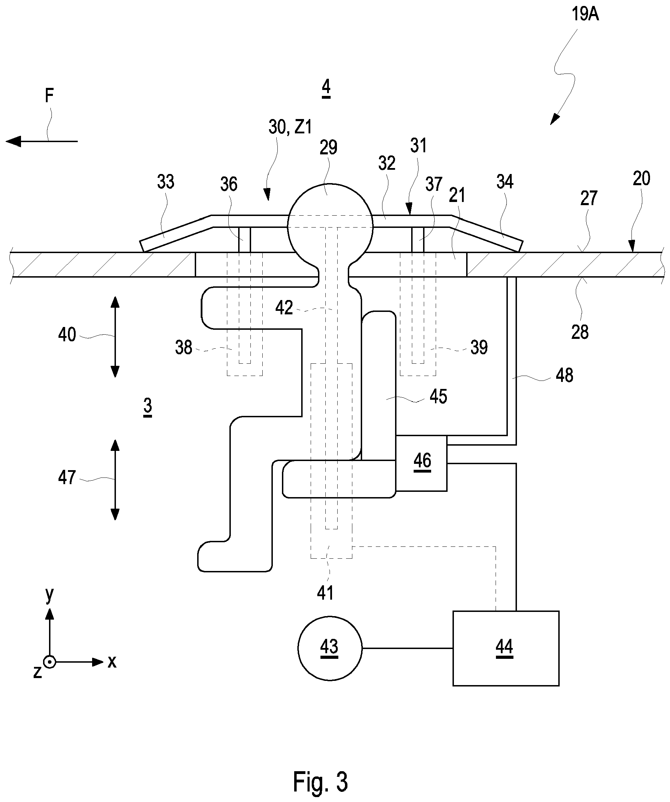

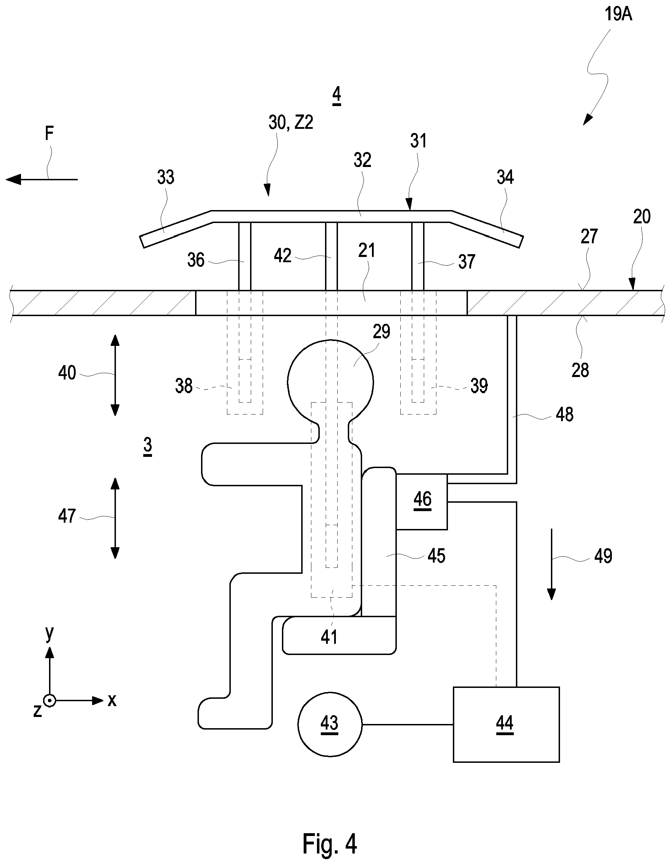

Die Fig. 2 zeigt eine schematische Aufsicht einer Ausführungsform eines Überrollschutzsystems 19A für das Fahrzeug 1. Die Fig. 3 zeigt eine schematische Schnittansicht des Überrollschutzsystems 19A. Die Fig. 4 zeigt eine weitere schematische Schnittansicht des Überrollschutzsystems 19A. Nachfolgend wird auf die Fig. 2 bis 4 gleichzeitig Bezug genommen.

An einer Wandung 20 der Fahrzeugzelle 2, insbesondere an dem Dach 5 oder an der Vorderwand 6, ist eine Lukenöffnung 21 vorgesehen, über welche der Innenraum 3 in die Umgebung 4 verlassen oder der Innenraum 3 von der Umgebung 4 aus betreten werden kann. Die Wandung 20 kann beispielsweise Teil des Dachs 5 oder der Vorderwand 6 sein. Die Wandung 20 kann horizontal verlaufen. Die Wandung 20 kann jedoch auch schräg oder vertikal angeordnet sein.

Das Fahrzeug 1 kann beliebig viele Lukenöffnungen 21 aufweisen. Beispielsweise kann auch an dem Turm 15 eine derartige Lukenöffnung 21 vorgesehen sein. Demgemäß kann die Wandung 20 auch Teil des Turms 15 sein. Die Lukenöffnung 21 kann eine beliebige Geometrie aufweisen. Beispielsweise kann die Lukenöffnung 21 rechteckförmig oder rund sein. Entlang der z-Richtung z betrachtet kann die Lukenöffnung 21 links oder rechts von dem Turm 15 platziert sein.

Der Lukenöffnung 21 ist ein Lukendeckel 22 zugeordnet, mit dessen Hilfe die Lukenöffnung 21 verschlossen werden kann. Der Lukendeckel 22 ist in den Fig. 3 und 4 nicht gezeigt. Der Lukendeckel 22 kann ein Klapplukendeckel, ein Schiebelukendeckel, ein Hublukendeckel oder ein Deckel mit einer kombinierten translatorischen und rotatorischen Öffnungs- und Schließbewegung sein. Nachfolgend wird davon ausgegangen, dass der Lukendeckel 22 ein Klapplukendeckel ist. Das heißt, dass der Lukendeckel 22 um eine Drehachse 23 drehbar an der Wandung 20 gelagert ist. Die Drehachse 23 kann parallel zu der z-Richtung z verlaufen.

Dabei kann der Lukendeckel 22 von einer nicht gezeigten geschlossenen Position in eine in der Fig. 2 gezeigte geöffnete Position verbracht werden. Der Lukendeckel 22 kann in seiner geöffneten Position verriegelt werden, so dass sich der Lukendeckel 22 auch bei einem Überschlag des Fahrzeugs 1 nicht selbsttätig schließen kann.

Der Lukendeckel 22 ist mit Hilfe von Scharnieren 24, 25 an der Wandung 20 angeschlagen. In der geöffneten Position kann der Lukendeckel 22 auf der Wandung 20 aufliegen. Dies ist jedoch nicht zwingend erforderlich. Der Lukendeckel 22 kann in der geöffneten Position auch nicht an der Wandung 20 anliegen. Der Lukendeckel 22 kann eine Verriegelungseinheit 26 zum Verriegeln und Entriegeln des Lukendeckels 22 aufweisen. Die Wandung 20 weist eine der Umgebung 4 zugewandte Außenseite 27 auf. Eine der Außenseite 27 abgewandte Innenseite 28 der Wandung 20 ist dem Innenraum 3 zugewandt.

Bei einem derartigen Fahrzeug 1 kann es unter anderem aufgrund der unübersichtlichen Fahrzeuggeometrie erforderlich sein, dass einzelne Besatzungsmitglieder 29 über Luke fahren. Dies kann stehend oder sitzend erfolgen. "Über Luke" heißt dabei, dass zumindest der Kopf des jeweiligen Besatzungsmitglieds 29 aus der Lukenöffnung 21 in die Umgebung 4 hineinragt. Dies kann zum Beispiel für die Unterstützung des Fahrers durch den Kommandanten oder für eine bessere Führbarkeit des Fahrzeugs 1 im zivilen Straßenverkehr erforderlich sein. Dieser Umstand kann dazu führen, dass im Falle eines Überschlags des Fahrzeugs 1 das über Luke fahrende Besatzungsmitglied 29 tödlichen Gefahren ausgesetzt ist. Im schlimmsten Fall kann es dazu kommen, dass das Besatzungsmitglied 29 durch das Fahrzeug 1 zerquetscht und somit tödlich verletzt wird.

Um die vorgenannte Problematik zu entschärfen, ist das nachfolgend erläuterte Überrollschutzsystem 19A vorgesehen. Jeder Lukenöffnung 21 des Fahrzeugs 1 kann ein derartiges Überrollschutzsystem 19A zugeordnet sein. Je Lukenöffnung 21 kann genau ein Überrollschutzsystem 19A vorgesehen sein. In den Fig. 2 bis 4 ist jedoch genau ein Überrollschutzsystem 19A gezeigt. Dieses Überrollschutzsystem 19A ist entlang der Fahrtrichtung F betrachtet rechts neben der Lukenöffnung 21 platziert.

Das Überrollschutzsystem 19A kann entlang der Fahrtrichtung F betrachtet jedoch auch links neben der Lukenöffnung 21 platziert sein. Es kann entlang der Fahrtrichtung F betrachtet auch links und rechts der Lukenöffnung 21 jeweils ein derartiges Überrollschutzsystem 19A platziert sein. Das Überrollschutzsystem 19A ist insbesondere auch für Fahrzeuggewichte von über 20 Tonnen geeignet.

Das Überrollschutzsystem 19A umfasst ein entlang der y-Richtung y ausfahrbares Schutzelement 30. Das Überrollschutzsystem 19A oder das Schutzelement 30 kann von einem in den Fig. 2 und 3 gezeigten eingefahrenen Zustand Z1 in einen in der Fig. 4 gezeigten ausgefahrenen Zustand Z2 und umgekehrt verbracht werden. Das Schutzelement 30 umfasst einen Schutzbügel 31. Der Schutzbügel 31 kann käfigförmig sein und sich entlang der x-Richtung x und der z-Richtung z betrachtet über die Lukenöffnung 21 erstrecken und diese somit abdecken. In diesem Fall ist das Schutzelement 30 jedoch dennoch derart ausgestaltet, dass der Lukendeckel 22 sowohl in dem eingefahrenen Zustand Z1 als auch in dem ausgefahrenen Zustand Z2 geöffnet und geschlossen werden kann.

Wie die Fig. 2 bis 4 zeigen, ist der Schutzbügel 31 vorliegend bügelförmig und kann einen horizontal verlaufenden Mittelabschnitt 32 und zwei seitlich an dem Mittelabschnitt 32 angebrachte und schräg zu diesem verlaufende Seitenabschnitte 33, 34 aufweisen, die in der Orientierung der Fig. 3 und 4 schräg nach unten orientiert sind. Die Seitenabschnitte 33, 34 sind optional. Der Schutzbügel 31 kann auch nur den Mittelabschnitt 32 aufweisen. In diesem Fall wird auf die Seitenabschnitte 33, 34 verzichtet. Der Schutzbügel 31 kann aus einem Metallrohr, insbesondere aus einem Stahlrohr oder aus einem Aluminiumrohr, gefertigt sein. In diesem Fall können die Seitenabschnitte 33, 34 bezüglich des Mittelabschnitts 32 umgebogen sein. Der Schutzbügel 31 kann auch eine Schweißkonstruktion sein.

In dem eingefahren Zustand Z1 kann der Schutzbügel 31 zumindest abschnittsweise auf der Außenseite 27 der Wandung 20 aufliegen oder an dieser anliegen. Alternativ kann an der Wandung 20 auch eine Tasche oder Ausnehmung 35 vorgesehen sein, in welcher der Schutzbügel 31 in dem eingefahrenen Zustand Z1 vollständig aufgenommen ist, so dass der Schutzbügel 31 nicht über die Außenseite 27 herausragt. Der Schutzbügel 31 kann dabei in dem eingefahrenen Zustand Z1 bündig mit der Außenseite 27 angeordnet sein oder hinter dieser zurückstehen.

Die Ausnehmung 35 ist jedoch optional. Für den Fall, dass keine derartige Ausnehmung 35 vorgesehen ist, kann der Schutzbügel 31 mit seinen schräg orientierten Seitenabschnitten 33, 34 an der Außenseite 27 der Wandung 20 anliegen, wie dies in der Fig. 3 gezeigt ist.

Das Schutzelement 30 umfasst neben dem Schutzbügel 31 zwei Führungselemente 36, 37. Insbesondere sind ein erstes Führungselement 36 und ein zweites Führungselement 37 vorgesehen. Die Führungselemente 36, 37 können stangenförmig sein. Die Führungselemente 36, 37 sind fest mit dem Schutzbügel 31 verbunden, insbesondere mit diesem verschweißt oder verschraubt. Die Führungselemente 36, 37 können im Querschnitt kreisförmig sein. Jedem Führungselement 36, 37 ist eine Führungshülse 38, 39 zugeordnet. In jeder Führungshülse 38, 39 ist eines der Führungselemente 36, 37 aufgenommen. Die Führungshülsen 38, 39 sind fest mit einer tragenden Struktur der Fahrzeugzelle 2 oder des Fahrzeugs 1 verbunden. Beispielsweise sind die Führungshülsen 38, 39 mit der Wandung 20 verschweißt. Insbesondere sind eine erste Führungshülse 38 und eine zweite Führungshülse 39 vorgesehen.

Die Führungselemente 36, 37 können aus den Führungshülsen 38, 39 heraus- und wieder in diese hineinbewegt werden, um das Schutzelement 30 von dem eingefahrenen Zustand Z1 in den ausgefahrenen Zustand Z2 und umgekehrt zu verbringen, wie dies in den Fig. 3 und 4 mit Hilfe eines Doppelpfeils 40 angedeutet ist. Das Schutzelement 30 ist somit teleskopierbar. "teleskopierbar" heißt in diesem Zusammenhang insbesondere, dass das Schutzelement 30 ausgefahren und so von dem eingefahrenen Zustand Z 1 in den ausgefahrenen Zustand Z2 verbracht werden kann. Optional kann das Schutzelement 30 auch wieder eingefahren und so von dem ausgefahrenen Zustand Z2 in den eingefahrenen Zustand Z1 verbracht werden.

Zum Verbringen des Schutzelements 30 von dem eingefahrenen Zustand Z1 in den ausgefahrenen Zustand Z2 weist das Überrollschutzsystem 19A einen Aktor 41 auf, der mit Hilfe eines Kopplungselements 42 mit dem Schutzbügel 31 gekoppelt ist. Der Aktor 41 kann auch als Aktuator oder als Stellelement bezeichnet sein. Ferner kann auch in jede der Führungshülsen 38, 39 ein derartiger Aktor 41 integriert sein. Der Aktor 41 ist geeignet, das Schutzelement 30 innerhalb weniger hundertstel Sekunden von dem eingefahrenen Zustand Z1 in den ausgefahrenen Zustand Z2 zu verbringen. Der Aktor 41 kann auch geeignet sein, das Schutzelement 30 von dem ausgefahrenen Zustand Z2 zurück in den eingefahrenen Zustand Z1 zu verbringen. Dies ist jedoch nicht zwingend erforderlich.

Beispielsweise ist der Aktor 41 ein Hydraulikzylinder oder ein Pneumatikzylinder. In diesem Fall kann das Kopplungselement 42 ein Kolben des Hydraulikzylinders oder des Pneumatikzylinders sein. Der Aktor 41 kann auch ein Elektromotor, insbesondere ein Linearmotor, sein oder einen Elektromotor aufweisen. Ferner kann der Aktor 41 auch einen Gasgenerator, insbesondere einen pyrotechnischen Gasgenerator, umfassen. In diesem Fall ist der Aktor 41 nur für ein einmaliges Verbringen des Schutzelements 30 von dem eingefahrenen Zustand Z 1 in den ausgefahrenen Zustand Z2 geeignet.

Das Überrollschutzsystem 19A umfasst ferner eine Sensorik 43. Die Sensorik 43 kann verschiedenste Sensoren umfassen. Beispielsweise kann die Sensorik 43 einen oder mehrere Neigungssensoren, einen oder mehrere Lagesensoren, einen oder mehrere Beschleunigungssensoren oder dergleichen aufweisen. Die Sensorik 43 ist mit einer Regel- und Steuereinheit 44 des Überrollschutzsystems 19A wirkverbunden. Die Wirkverbindung kann drahtgebunden oder drahtlos sein. Die Regel- und Steuereinheit 44 kann ein fahrzeuginternes System, wie beispielsweise ein CAN-Knoten (Engl.: Controller Area Network), oder ein beliebiges Steuergerät sein. Die Regel- und Steuereinheit 44 ist wiederum mit dem Aktor 41 wirkverbunden. Auch hier kann die Wirkverbindung drahtgebunden oder drahtlos sein. Die Regel- und Steuereinheit 44 dient zur Datenauswertung und zur Weitergabe von Steuersignalen an den Aktor 41.

Mit Hilfe der Sensorik 43 kann beispielsweise eine Bewegung oder Verkippung des Fahrzeugs 1 um die x-Richtung x, um die y-Richtung y und/oder um die z-Richtung z erfasst werden. Die Bewegung oder Verkippung des Fahrzeugs 1 kann eine kombinierte Roll-, Gier- und/oder Nickbewegung sein. Wird ein bestimmter voreingestellter Grenzwert der Verkippung überschritten, so dass zu erwarten ist, dass sich das Fahrzeug 1 überschlägt, so steuert die Regel- und Steuereinheit 44 den Aktor 41 derart an, dass dieser das Schutzelement 30 von dem eingefahrenen Zustand Z1 (Fig. 2 und 3) in den ausgefahrenen Zustand Z2 (Fig. 4) verbringt. Das Verbringen des Schutzelements 30 von dem eingefahrenen Zustand Z1 in den ausgefahrenen Zustand Z2 kann innerhalb von Bruchteilen von Sekunden, beispielsweise innerhalb von etwa 20 bis 50 Millisekunden, erfolgen.

Die Sensorik 43 kann auch einen oder mehrere Sensoren umfassen, die dazu geeignet sind, zu erfassen, ob der Lukendeckel 22 geöffnet oder geschlossen ist. Sofern der Lukendeckel 22 geschlossen ist, kann das Überrollschutzsystem 19A und insbesondere der Aktor 41 deaktiviert sein. Dies verhindert ein unerwünschtes Auslösen des Überrollschutzsystems 19A bei geschlossener Lukenöffnung 21. Wie zuvor erwähnt, kann die Sensorik 43 aus diesem Grund dazu geeignet sein, zu erfassen, ob der Lukendeckel 22 geöffnet oder geschlossen ist. Im einfachsten Fall wird durch den geschlossenen Lukendeckel 22 ein an der Lukenöffnung 21 oder an dem Lukendeckel 22 montierter Schalter geöffnet oder geschlossen, der Teil der Sensorik 43 sein kann.

Die Sensorik 43 zur Überschlagsdetektion kann außerdem auch für weitere Komponenten des Fahrzeugs 1 genutzt werden, welche spezifische Lageinformationen des Fahrzeugs 1 benötigen. Dies betrifft beispielsweise eine Waffensensorik der Bewaffnung 16.

Im Falle eines Überschlags stürzt das Fahrzeug 1 nun auf das ausgefahrene Schutzelement 30, wodurch das über Luke fahrende Besatzungsmitglied 29 wertvolle Sekunden gewinnt, in denen sich das Besatzungsmitglied 29 vollständig in den Innenraum 3 zurückziehen kann, um Verletzungen zu entgehen. Für den Fall, dass das Besatzungsmitglied 29 steht, kann sich das Besatzungsmitglied 29 bei einem Überschlag des Fahrzeugs 1 wegducken. Insbesondere verhindert das Schutzelement 30 in dem ausgefahrenen Zustand Z2, dass das Fahrzeug 1 nach einem Überschlag auf der Wandung 20, insbesondere auf dem Dach 5 oder auf der Vorderwand 6, zum Liegen kommt.

Unter einem "Überschlag" ist vorliegend insbesondere zu verstehen, dass sich das Fahrzeug 1 zumindest auf das Dach 5 oder auf die Vorderwand 6 dreht. Dies schließt jedoch nicht aus, dass sich das Fahrzeug 1 bei einem Überschlag auch zumindest einmal vollständig, das heißt um 360°, oder auch mehrfach um die x-Richtung x, die y-Richtung y und/oder die z-Richtung z dreht.

Für den Fall, dass das Besatzungsmitglied 29 auf einem Tragelement 45 sitzt, kann das Besatzungsmitglied 29 seinen Kopf einziehen oder zur Seite legen. Das Besatzungsmitglied 29 wird so bei einem Überschlag des Fahrzeugs 1 nun vor einem direkten Kontakt mit sich in der Umgebung 4 befindlichen Objekten oder mit dem Untergrund 18 geschützt. Ferner kann das Besatzungsmitglied 29 auch nicht unter dem umgekippten Fahrzeug 1 eingeklemmt werden. Das Schutzelement 30 ermöglicht somit einen zuverlässigen Schutz des Besatzungsmitglieds 29 bei einem Überschlag des Fahrzeugs 1. Somit können schwere bis tödliche Verletzungen des Besatzungsmitglieds 29 vermieden werden.

Optional ist es auch möglich, dass das Tragelement 45 zeitgleich mit dem Auslösen des Aktors 41 automatisiert in den Innenraum 3 zurückgezogen wird, so dass sich das Besatzungsmitglied 29 im Falle eines Überschlags des Fahrzeugs 1 vollständig innerhalb des Innenraums 3 befindet. Das Tragelement 45 kann hierzu an der Fahrzeugzelle 2, insbesondere an dem Dach 5 oder an der Vorderwand 6, aufgehängt sein. Das Besatzungsmitglied 29 ist an oder auf dem Tragelement 45 festgeschnallt, so dass das Besatzungsmitglied 29 bei einem Überschlag des Fahrzeugs 1 nicht aus der Fahrzeugzelle 2 herausgeschleudert werden kann.

Das Tragelement 45 kann ein Sitz für das Besatzungsmitglied 29 sein. Demgemäß können vorliegend die Begriffe "Tragelement" und "Sitz" beliebig gegeneinander getauscht werden. Alternativ kann das Tragelement 45 auch eine Stehplattform für das Besatzungsmitglied 29 sein. Nachfolgend wird jedoch davon ausgegangen, dass das Überrollschutzsystem 19A ein Tragelement 45 in Form eines Sitzes umfasst.

Dem Tragelement 45 ist eine Verstelleinheit 46 zugeordnet, mit deren Hilfe das Tragelement 45 entlang und entgegen der y-Richtung y bewegt werden kann, wie in den Fig. 3 und 4 mit Hilfe eines Doppelpfeils 47 angedeutet ist. Die Verstelleinheit 46 kann beispielsweise hydraulisch oder pneumatisch angetrieben werden. Ferner kann die Verstelleinheit 46 auch mit Hilfe eines pyrotechnischen Gasgenerators angetrieben werden. Für den Fall, dass das Tragelement 45 ein Sitz ist, kann die Verstelleinheit 46 demgemäß als Sitzverstelleinheit bezeichnet werden. Demgemäß sind vorliegend die Begriffe "Verstelleinheit" und "Sitzverstelleinheit" gegeneinander tauschbar.

Die Verstelleinheit 46 kann mit Hilfe einer Aufhängung 48 an der Fahrzeugzelle 2, insbesondere an der Innenseite 28 der Wandung 20, aufgehängt sein. Die Aufhängung 48 kann strebenförmig sein. Die Aufhängung 48 kann aus Rohren aufgebaut sein. Das Tragelement 45 und/oder die Verstelleinheit 46 können Teil des Überrollschutzsystems 19A sein.

Die Verstelleinheit 46 ist mit der Regel- und Steuereinheit 44 in Wirkverbindung. Die Wirkverbindung kann drahtlos oder drahtgebunden sein. Beispielsweise steuert die Regel- und Steuereinheit 44 die Verstelleinheit 46 im Falle eines Überschlags des Fahrzeugs 1 derart an, dass sich das Tragelement 45 mitsamt dem Besatzungsmitglied 29 entgegen der y-Richtung y nach unten bewegt, wie in der Fig. 4 mit Hilfe eines Pfeils 49 angedeutet ist. Eine Zeitspanne, in welcher das Schutzelement 30 ausgefahren wird, kann so genutzt werden, um das Tragelement 45 in den Innenraum 3 einzuziehen und so das Besatzungsmitglied 29 vor Verletzungen zu schützen.

Alternativ kann das Schutzelement 30 bei dem Verbringen desselben von dem eingefahrenen Zustand Z1 in den ausgefahrenen Zustand Z2 anstelle einer linearen Bewegung alternativ auch eine rotatorische Bewegung vollziehen. Hierbei kann das Schutzelement 30 derart um eine Drehachse verschwenkt werden, dass das Schutzelement 30 eine Schwenkbewegung oder Rotationsbewegung um diese Drehachse durchführt, um das Schutzelement 30 von dem eingefahrenen Zustand Z1 in den ausgefahrenen Zustand Z2 und optional auch wieder umgekehrt zu verbringen.

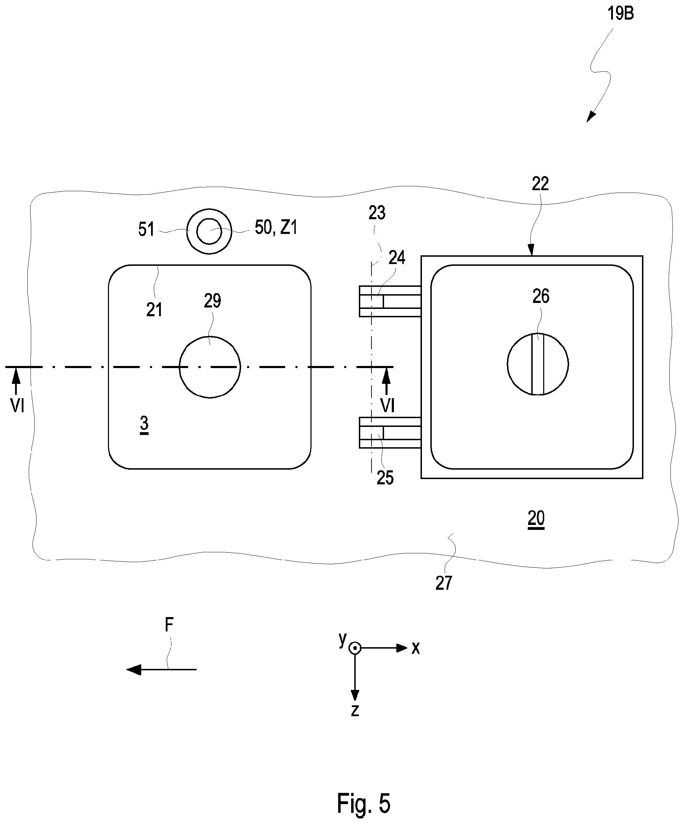

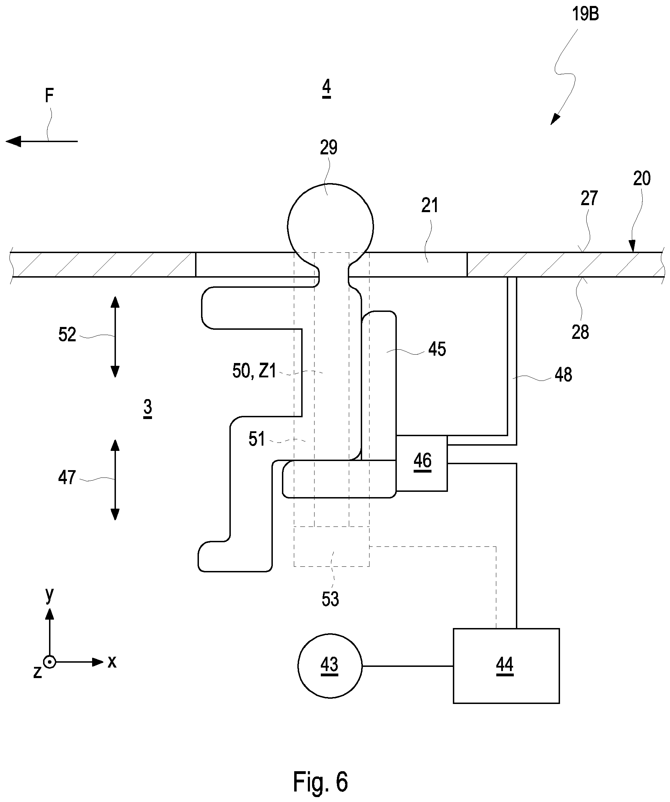

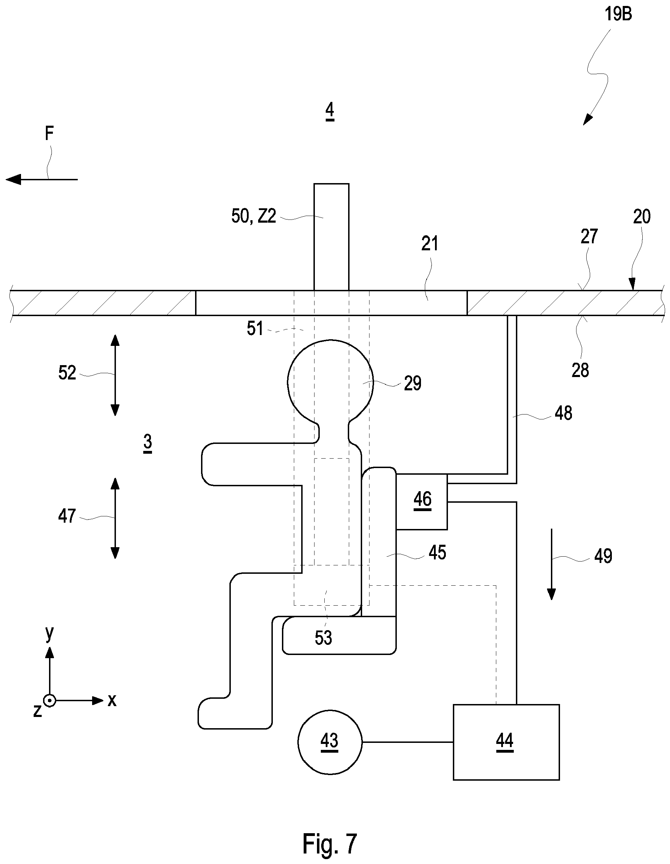

Die Fig. 5 zeigt eine schematische Aufsicht einer weiteren Ausführungsform eines Überrollschutzsystems 19B für das Fahrzeug 1. Die Fig. 6 zeigt eine schematische Schnittansicht des Überrollschutzsystems 19B. Die Fig. 7 zeigt eine weitere schematische Schnittansicht des Überrollschutzsystems 19B. Nachfolgend wird auf die Fig. 5 bis 7 gleichzeitig Bezug genommen.

Das Überrollschutzsystem 19B entspricht von seinem Aufbau und seiner Funktionalität her im Wesentlichen dem des Überrollschutzsystems 19A. Daher wird im Folgenden nur auf Unterschiede des Überrollschutzsystems 19B zu dem Überrollschutzsystem 19A eingegangen. Alle vorherigen Ausführungen betreffend das Überrollschutzsystem 19A sind entsprechend auf das Überrollschutzsystem 19B und umgekehrt anwendbar.

Dementsprechend kann das Überrollschutzsystem 19B, wie das Überrollschutzsystem 19A, entlang der Fahrtrichtung F betrachtet rechts neben der Lukenöffnung 21 platziert sein. Das Überrollschutzsystem 19B kann entlang der Fahrtrichtung F betrachtet jedoch auch links neben der Lukenöffnung 21 platziert sein. Wie zuvor erwähnt, kann entlang der Fahrtrichtung F betrachtet auch links und rechts der Lukenöffnung 21 jeweils ein derartiges Überrollschutzsystem 19B platziert sein. Das Überrollschutzsystem 19B ist insbesondere auch für Fahrzeuggewichte von über 20 Tonnen geeignet.

Im Unterschied zu dem Überrollschutzsystem 19A weist das Überrollschutzsystem 19B kein Schutzelement 30 mit einem Schutzbügel 31 auf, sondern ein stempelförmiges Schutzelement 50. Das Schutzelement 50 kann von einem in den Fig. 5 und 6 gezeigten eingefahrenen Zustand Z1 in einen in der Fig. 7 gezeigten ausgefahrenen Zustand Z2 und umgekehrt verbracht werden.

Das Schutzelement 50 ist in einer Führungshülse 51 verschieblich aufgenommen. Die Führungshülse 51 ist fest mit einer tragenden Struktur der Fahrzeugzelle 2 oder des Fahrzeugs 1 verbunden. Beispielsweise ist die Führungshülse 51 mit der Wandung 20 verschweißt. Das Schutzelement 50 kann aus der Führungshülse 51 heraus- und wieder in diese hineinbewegt werden, um das Schutzelement 50 von dem eingefahrenen Zustand Z 1 in den ausgefahrenen Zustand Z2 und umgekehrt zu verbringen, wie dies in den Fig. 6 und 7 mit Hilfe eines Doppelpfeils 52 angedeutet ist. Das Schutzelement 50 kann bündig zu der Außenseite 27 der Wandung 20 angeordnet sein oder hinter dieser zurückstehen.

Dem Schutzelement 50 ist ein Aktor 53 zugeordnet, der in die Führungshülse 51 integriert sein kann. Der Aktor 53 kann auch als Aktuator oder als Stellelement bezeichnet sein. Der Aktor 53 ist geeignet, das Schutzelement 50 innerhalb weniger hundertstel Sekunden von dem eingefahrenen Zustand Z1 in den ausgefahrenen Zustand Z2 zu verbringen. Der Aktor 53 kann auch geeignet sein, das Schutzelement 50 von dem ausgefahrenen Zustand Z2 zurück in den eingefahrenen Zustand Z1 zu verbringen. Dies ist jedoch nicht zwingend erforderlich.

Beispielsweise ist der Aktor 53 ein Hydraulikzylinder oder ein Pneumatikzylinder. In diesem Fall kann das Schutzelement 50 ein Kolben des Hydraulikzylinders oder des Pneumatikzylinders sein. Der Aktor 53 kann auch ein Elektromotor, insbesondere ein Linearmotor, sein oder einen Elektromotor aufweisen. Ferner kann der Aktor 53 auch einen Gasgenerator, insbesondere einen pyrotechnischen Gasgenerator, umfassen. In diesem Fall ist der Aktor 53 nur für ein einmaliges Verbringen des Schutzelements 30 von dem eingefahrenen Zustand Z1 in den ausgefahrenen Zustand Z2 geeignet.

Wie zuvor mit Bezug auf das Überrollschutzsystem 19A erläutert, umfasst das Überrollschutzsystem 19B ebenfalls eine Sensorik 43, eine Regel- und Steuereinheit 44, mit welcher der Aktor 53 wirkverbunden ist, ein Tragelement 45 und eine Verstelleinheit 46, die mit Hilfe einer Aufhängung 48 an der Wandung 20 aufgehängt sein kann.

Im Falle eines Überschlags stürzt das Fahrzeug 1 auf das ausgefahrene Schutzelement 50, wodurch das über Luke fahrende Besatzungsmitglied 29 wertvolle Sekunden gewinnt, in denen sich das Besatzungsmitglied 29 vollständig in den Innenraum 3 zurückziehen kann, um Verletzungen zu entgehen. Für den Fall, dass das Besatzungsmitglied 29 steht, kann sich das Besatzungsmitglied 29 bei einem Überschlag des Fahrzeugs 1 wegducken.

Optional ist es auch möglich, dass das Tragelement 45 zeitgleich mit dem Auslösen des Aktors 53 automatisiert in den Innenraum 3 zurückgezogen wird, so dass sich das Besatzungsmitglied 29 im Falle eines Überschlags des Fahrzeugs 1 vollständig innerhalb des Innenraums 3 befindet, wie dies schon zuvor mit Bezug auf das Überrollschutzsystem 19A erläutert wurde.

Die Funktionalität des Überrollschutzsystems 19A, 19B zusammenfassend, detektiert die Regel- und Steuereinheit 44 basierend auf Sensorsignalen der Sensorik 43 einen Überschlag des Fahrzeugs 1 oder einen Grenzwert einer Verkippung des Fahrzeugs 1 um die x-Richtung x und/oder die z-Richtung z, bei dem ein Überschlag des Fahrzeugs 1 zu erwarten ist. Der jeweilige Aktor 41, 53 ist nicht aktiviert und das Schutzelement 30, 50 befindet sich in dem eingefahrenen Zustand Z1.

Bei der Detektion eines Überschlags des Fahrzeugs 1 wird der jeweilige Aktor 41, 53 mit Hilfe der Regel- und Steuereinheit 44 angesteuert und das Schutzelement 30, 50 wird innerhalb weniger hundertstel Sekunden von dem eingefahren Zustand Z 1 in den ausgefahrenen Zustand Z2 verbracht. Durch dieses Wirkprinzip wird das Besatzungsmitglied 29 bei einem Überschlag des Fahrzeugs 1 wirksam vor Verletzungen geschützt.

Optional kann sich das Schutzelement 30, 50 in dem ausgefahrenen Zustand Z2 verriegeln oder sperren. Hierzu kann beispielsweise eine mechanische Verriegelungseinrichtung vorgesehen sein. Diese Verriegelungseinrichtung kann beispielweise eine Sperrklinke sein oder aufweisen, die in dem ausgefahrenen Zustand Z2 formschlüssig in das Schutzelement 30, 50 eingreift. Eine formschlüssige Verbindung entsteht durch das Ineinander- oder Hintergreifen von zumindest zwei Bauteilen. Formschlüssige Verbindungen sind wieder lösbare Verbindungen.

Dadurch, dass sich das Schutzelement 30, 50 in dem ausgefahrenen Zustand Z2 verriegelt, wird beispielsweise verhindert, dass das Schutzelement 30, 50 durch die auf dieses wirkende Gewichtskraft G des Fahrzeugs 1 in unerwünschter Weise von dem ausgefahrenen Zustand Z2 zurück in den eingefahrenen Zustand Z1 verbracht wird. Hierdurch wird insbesondere auch verhindert, dass der Aktor 41, 53 mit der gesamten Gewichtskraft G des Fahrzeugs 1 belastet wird. Eine Beschädigung oder Überlastung des Aktors 41, 53 wird dadurch vermieden.

Der Aktor 41, 53 stellt die physische Umsetzung von Energie dar. Der Aktor 41, 53 kann auf unterschiedlichste Arten fungieren. Im Folgenden werden nur einige mögliche Wirkprinzipen des Aktors 41, 53 erläutert. Der Aktor 41, 53 kann insbesondere mechanisch fungieren. In diesem Fall kann der Aktor 41, 53 beispielsweise Federelemente, insbesondere vorgespannte Federpakete, aufweisen.

Ferner kann der Aktor 41, 53 hydraulisch arbeiten. In diesem Fall kann beispielsweise ein einfacher oder teleskopierbarer Hydraulikzylinder als Aktor 41, 53 eingesetzt werden. Auch ein elektrisch fungierender Aktor 41, 53 ist möglich.

Beispielsweise kann ein Motor mit einer Verstelleinrichtung als Aktor 41, 53 verwendet werden. Wie zuvor schon erwähnt, kann der Aktor 41, 53 auch eine Explosivladung aufweisen.

Die Vorteile der Ausführungsformen des Überrollschutzsystems 19A, 19B liegen darin, dass das Schutzelement 30, 50 nicht permanent außerhalb des Fahrzeugs 1, insbesondere der Fahrzeugzelle 2, verbleibt. Ferner ist das Überrollschutzsystem 19A, 19B auf die hohe Gewichtskraft G des Fahrzeugs 1 von über 20 Tonnen ausgelegt. Je nach Ausführungsform des Überrollschutzsystems 19A, 19B kann dieses mit minimalem Aufwand nachträglich in ein Fahrzeug (nicht gezeigt) ohne ein derartiges Überrollschutzsystem 19A, 19B integriert werden. Das Überrollschutzsystem 19A, 19B ist somit nachrüstbar.

Ferner ermöglicht das Überrollschutzsystem 19A, 19B neben dem Schutz des Besatzungsmitglieds 29 auch einen Schutz von Komponenten, die außenseitig an dem Fahrzeug 1 oder an der Fahrzeugzelle 2 montiert sind. Vorteilhafterweise bringt das Überrollschutzsystem 19A, 19B aufgrund seiner Ausfahrbarkeit keine zusätzlichen Sichteinschränkungen mit sich. Der variable Aufbau des Überrollschutzsystems 19A, 19B ermöglicht den Schutz des Besatzungsmitglieds 29 bei einem Überschlag des Fahrzeugs 1. In dem Fall eines Überschlags des Fahrzeugs 1 können mit Hilfe des Überrollschutzsystems 19A, 19B schwere bis tödliche Verletzungen des Besatzungsmitglieds 29 vermieden werden.

Das Überrollschutzsystem 19A, 19B selbst kann dabei so gestaltet sein, dass dieses eine Doppelfunktion erfüllt. So kann beispielweise das Überrollschutzsystem 19A, 19B derart ausgestaltet sein, dass mit dessen Hilfe das Fahrzeug 1 durch Rettungskräfte wieder auf die Räder 11, 12, 13, 14 gerollt werden kann. Diese Doppelfunktionalität resultiert aus der zuvor erwähnten Teleskopierbarkeit des Überrollschutzsystems 19A, 19B.

Für den Aktor 41, 53 sind unterschiedliche Wirkprinzipien möglich. Beispiel kann der Aktor 41, 53 rein mechanisch fungieren. In diesem Fall kann der Aktor 41, 53 beispielsweise vorgespannte Federpakete aufweisen. Wie zuvor erwähnt, kann der Aktor 41, 53 ein Hydraulikzylinder sein oder einen Hydraulikzylinder aufweisen. Der Hydraulikzylinder kann einfach oder teleskopierbar sein.

Auch ein elektrisches Wirkprinzip ist möglich. In diesem Fall kann der Aktor 41, 53 beispielsweise einen Elektromotor mit einer Verstelleinrichtung umfassen. Der Aktor 41, 53 kann ferner explosiv fungieren. In diesem Fall kann ein, insbesondere pyrotechnischer, Gasgenerator als Aktor 41, 53 eingesetzt werden. Es können auch Kombinationen der vorgenannten Wirkprinzipien zur Anwendung kommen. Hierbei sind insbesondere elektromechanische Wirkprinzipien denkbar.

Die unterschiedlichen Ausgestaltungen des Wirkprinzips des Aktors 41, 53 bieten neben der direkten mechanischen Umsetzung weitere Vorteile. So können beispielsweise bei hydraulischen Aktoren 41, 53 die Schutzelemente 30, 50 an unterschiedlichen Punkten am Fahrzeug 1 integriert werden. Dies würde dazu führen, dass das Besatzungsmitglied 29 oder mehrere Besatzungsmitglieder 29 gleichzeitig geschützt werden können. Vergleichbare Vorteile bieten sich auch bei einer elektrischen oder explosiven Umsetzung.

Neben der rein physischen Umsetzung des Wirkprinzips können noch weitere Gestaltungsmerkmale berücksichtigt werden. Dabei sind reversible und irreversible Prozesse zu unterscheiden. Eine irreversible Umsetzung liegt beispielsweise bei einer mechanischen Umsetzung, beispielsweise in Form eines vorgespannten Federpakets, vor. Wird der Aktor 41, 53 in diesem Fall ausgelöst, so kann dieser nicht ohne zusätzliche Hilfsmittel wieder in seinen Ursprungszustand zurückgesetzt werden.

Darüber hinaus kann der Aktor 41, 53 derart gestaltet werden, dass sich dieser nach einer einmaligen Auslösung verklemmt. So wird beispielsweise vermieden, dass der Aktor 41, 53 auf zu hohe Kräfte ausgelegt werden muss. Eine reversible Umsetzung kann beispielsweise bei einer wie zuvor erwähnten Doppelfunktion genutzt werden. Mit Hilfe des Aktors 41, 53 kann dann das jeweilige Schutzelement 30, 50 separat hochgefahren und wieder abgesenkt werden.

Obwohl die vorliegende Erfindung anhand von Ausführungsbeispielen beschrieben wurde, ist sie vielfältig modifizierbar.

### BEZUGSZEICHENLISTE

- 1: Fahrzeug
- 2: Fahrzeugzelle
- 3: Innenraum
- 4: Umgebung
- 5: Dach
- 6: Vorderwand
- 7: Radachse
- 8: Radachse
- 9: Radachse
- 10: Radachse
- 11: Rad
- 12: Rad
- 13: Rad
- 14: Rad
- 15: Turm
- 16: Bewaffnung
- 17: Drehachse
- 18: Untergrund
- 19A: Überrollschutzsystem
- 19B: Überrollschutzsystem
- 20: Wandung
- 21: Lukenöffnung
- 22: Lukendeckel
- 23: Drehachse
- 24: Scharnier
- 25: Scharnier
- 26: Verriegelungseinheit
- 27: Außenseite
- 28: Innenseite
- 29: Besatzungsmitglied
- 30: Schutzelement
- 31: Schutzbügel
- 32: Mittelabschnitt
- 33: Seitenabschnitt
- 34: Seitenabschnitt
- 35: Ausnehmung
- 36: Führungselement
- 37: Führungselement
- 38: Führungshülse
- 39: Führungshülse
- 40: Doppelpfeil
- 41: Aktor
- 42: Kopplungselement
- 43: Sensorik
- 44: Regel- und Steuereinheit
- 45: Tragelement
- 46: Verstelleinheit
- 47: Doppelpfeil
- 48: Aufhängung
- 49: Pfeil
- 50: Schutzelement
- 51: Führungshülse
- 52: Doppelpfeil
- 53: Aktor

- F: Fahrtrichtung
- g: Schwerkraftrichtung
- G: Gewichtskraft
- x: x-Richtung
- y: y-Richtung
- z: z-Richtung
- Z1: Zustand
- Z2: Zustand

## Patentansprüche

1. Überrollschutzsystem (19A, 19B) für ein geschütztes Fahrzeug (1), mit
einem Schutzelement (30, 50) zum Schützen eines sich teilweise innerhalb und teilweise außerhalb des geschützten Fahrzeugs (1) aufhaltenden Besatzungsmitglieds (29) bei einem Überschlag des geschützten Fahrzeugs (1), und
einem dem Schutzelement (30, 50) zugeordneten Aktor (41, 53),
wobei der Aktor (41, 53) dazu eingerichtet ist, das Schutzelement (30, 50) unmittelbar vor oder bei dem Überschlag des geschützten Fahrzeugs (1) von einem eingefahrenen Zustand (Z1) in einen ausgefahrenen Zustand (Z2) zu verbringen, und
wobei das Schutzelement (30, 50) in dem ausgefahrenen Zustand (Z2) über Bereiche des Besatzungsmitglieds (29), die während des Überschlags außerhalb des geschützten Fahrzeugs (1) angeordnet sind, herausragt.

2. Überrollschutzsystem nach Anspruch 1,
**gekennzeichnet durch**
einen Lukendeckel (22) zum Öffnen und Schließen einer an dem geschützten Fahrzeug (1) vorgesehenen Lukenöffnung (21), wobei das Schutzelement (30, 50) von dem Lukendeckel (22) entkoppelt ist.

3. Überrollschutzsystem nach Anspruch 1 oder 2,
**dadurch gekennzeichnet,**
**dass** das Schutzelement (30, 50) bei dem Verbringen desselben von dem eingefahrenen Zustand (Z1) in den ausgefahrenen Zustand (Z2) eine lineare und/oder eine rotatorische Bewegung durchführt.

4. Überrollschutzsystem nach einem der Ansprüche 1 - 3,
**dadurch gekennzeichnet,**
**dass** sich das Schutzelement (30, 50) in dem ausgefahrenen Zustand (Z2) verriegelt.

5. Überrollschutzsystem nach einem der Ansprüche 1 - 4,
**dadurch gekennzeichnet,**
**dass** das Schutzelement (30) einen Schutzbügel (31) aufweist, der mit Hilfe von Führungselementen (36, 37) linear an Führungshülsen (38, 39) geführt ist, wobei die Führungselemente (36, 37) mit dem Schutzbügel (31) verbunden sind.

6. Überrollschutzsystem nach Anspruch 5,
**dadurch gekennzeichnet**
**dass** der Aktor (41) mit dem Schutzbügel (31) gekoppelt ist.

7. Überrollschutzsystem nach Anspruch 5 oder 6,
**dadurch gekennzeichnet,**
**dass** der Schutzbügel (31) einen Mittelabschnitt (32) und endseitig an dem Mittelabschnitt (32) angebrachte Seitenabschnitte (33, 34) aufweist, wobei die Seitenabschnitte (33, 34) schräg zu dem Mittelabschnitt (32) orientiert sind.

8. Überrollschutzsystem nach einem der Ansprüche 1 - 4,
**dadurch gekennzeichnet,**
**dass** das Schutzelement (50) stempelförmig ist.

9. Überrollschutzsystem nach einem der Ansprüche 1 - 8,
**dadurch gekennzeichnet,**
**dass** der Aktor (41, 53) dazu eingerichtet ist, das Schutzelement (30, 50) von dem ausgefahrenen Zustand (Z2) zurück in den eingefahrenen Zustand (Z1) zu verbringen.

10. Überrollschutzsystem nach einem der Ansprüche 1 - 9,
**dadurch gekennzeichnet,**
**dass** der Aktor (41, 53) dazu eingerichtet ist, das Schutzelement (30, 50) pneumatisch, hydraulisch, elektrisch, mechanisch und/oder explosiv von dem eingefahrenen Zustand (Z1) in den ausgefahrenen Zustand (Z2) zu verbringen.

11. Überrollschutzsystem nach einem der Ansprüche 1 - 10,
**gekennzeichnet durch**
eine Sensorik (43), die dazu eingerichtet ist, eine Verkippung des geschützten Fahrzeugs (1) um zumindest eine Raumrichtung (x, y, z) zu erfassen, und
eine Regel- und Steuereinheit (44), die dazu eingerichtet ist, den Aktor (41, 53) basierend auf Sensorsignalen der Sensorik (43) derart anzusteuern, dass der Aktor (41, 53) das Schutzelement (30, 50) unmittelbar vor oder bei dem Überschlag des geschützten Fahrzeugs (1) von dem eingefahrenen Zustand (Z1) in den ausgefahrenen Zustand (Z2) verbringt.

12. Überrollschutzsystem nach Anspruch 11,
**gekennzeichnet durch**
ein Tragelement (45) zum Tragen des Besatzungsmitglieds (29), und
eine Verstelleinheit (46) zum Verstellen einer Höhenposition des Tragelements (45),
wobei die Regel- und Steuereinheit (44) dazu eingerichtet ist, die Verstelleinheit (46) basierend auf Sensorsignalen der Sensorik (43) derart anzusteuern, dass die Verstelleinheit (46) unmittelbar vor oder bei dem Überschlag des geschützten Fahrzeugs (1) die Höhenposition des Tragelements (45) derart verstellt, dass sich das Besatzungsmitglied (29) vollständig in das geschützte Fahrzeug (1) hineinverlagert.

13. Geschütztes Fahrzeug (1) mit zumindest einem Überrollschutzsystem (19A, 19B) nach einem der Ansprüche 1 - 12.

14. Geschütztes Fahrzeug nach Anspruch 13,
**dadurch gekennzeichnet,**
**dass** das geschützte Fahrzeug (1) eine Wandung (20) mit einer Lukenöffnung (21) aufweist, wobei das Überrollschutzsystem (19A, 19B) an der Wandung (20) montiert ist.

15. Geschütztes Fahrzeug nach Anspruch 13 oder 14,
**dadurch gekennzeichnet,**
**dass** das Überrollschutzsystem (19A, 19B) eine Führungshülse (38, 39, 51) zum linearen Führen des Schutzelements (30, 50) aufweist, wobei die Führungshülse (38, 39, 51) mit dem geschützten Fahrzeug (1) verbunden ist.
